# EUROPEAN PATENT APPLICATION

(11) **EP 2 056 539 A1**
(43) Date of publication of application: **06.05.2009**
(21) Application number: 07764161.1
(22) Date of filing: 04.07.2007
(51) Int. Cl.: H04L 12/56

(54) **A METHOD AND DEVICE FOR GAINING A ROUTE MESSAGE, A METHOD AND SYSTEM FOR LOCATING A USER TERMINAL**

(30) Priority: 24.08.2006 CN 200610111380
(71) Applicant: Huawei Technologies Co., Ltd., Longgang District, Shenzhen Guangdong 518129 (CN)
(72) Inventor: LAI, Hao, Shenzhen, Guangdong 518129 (CN)
(74) Representative: Gulde Hengelhaupt Ziebig & Schneider
(86) International application number: PCT/CN2007/070232
(87) International publication number: WO 2008/025265

(57) **Abstract**

A method and device for locating a user terminal, recording a route message from a calling user terminal activating a callback service to a server; when a callback indication is running, the callback indication message is transmitted to the calling user terminal activating the callback service based on the route message recorded. A method and system for gaining a route message. The method and the device realize initiating a callback to an initial calling terminal in the condition that the calling user is a multi-terminal.

## Description

This application claims priority to the Chinese patent application No. 200610111380.1, entitled "Method for Acquiring Information on routing from Subscriber Terminal to Server and Application thereof" and filed with the Chinese Patent Office on August 24, 2006, the contents of which are incorporated herein by reference in its entirety.

### Field of the Invention

The present invention relates to the communication field and in particular to a method and device for acquiring routing information, and a method and system for locating a user terminal.

### Background of the Invention

An IP Multimedia Subsystem (IMS), which is a core subsystem of the Next Generation Network (NGN), adopts a packet domain as a bearer channel for transmission of its upper control signaling and media, and introduces the Session Initiation Protocol (SIP) as a service control protocol. With the features of the SIP such as simplicity, easy extensibility and convenient media combination, the IMS provides abundant multimedia services through separation of service control from bearer control. Primary functional entities in the IMS include a Call Session Control Function (CSCF) net element responsible for user registration control, session control, etc., an Application Server (AS) for providing various service logic control functions, an Home Subscriber Server (HSS) for centralized management of user subscription data and a Media Gateway Control Function (MGCF) entity for intercommunication with a circuit switched network. A user may access the IMS through a proxy node Proxy-CSCF (P-CSCF) in the place where he is located, and the control of triggering session & service and the service control interaction with the AS are accomplished by a home domain serving node S-CSCF in the place where he has been registered.

SUBSCRIBE and NOTIFY methods are introduced in the existing SIP protocol for an event notification. The SUBSCRIBE method is intended for subscription and the NOTIFY method is intended for transfer of a notification about any change of an event. The so-called event notification is that a user or resource initiates subscription to another resource since the latter contains an event in which the former is interested, and thereafter the former may receive a notification about status and any change of the event.

In a service of Completion of Communication session to Busy Subscriber (CCBS), i.e., a callback service, a calling user A dials a called user B, and if the user B is busy, then the CCBS service is activated; and thereafter the system monitors status of the called user B, and notifies the user A if the user B becomes idle; and the user A initiates a recall to the user B and the user B replies, so that the calling user and the called user start normal communication and the service is completed.

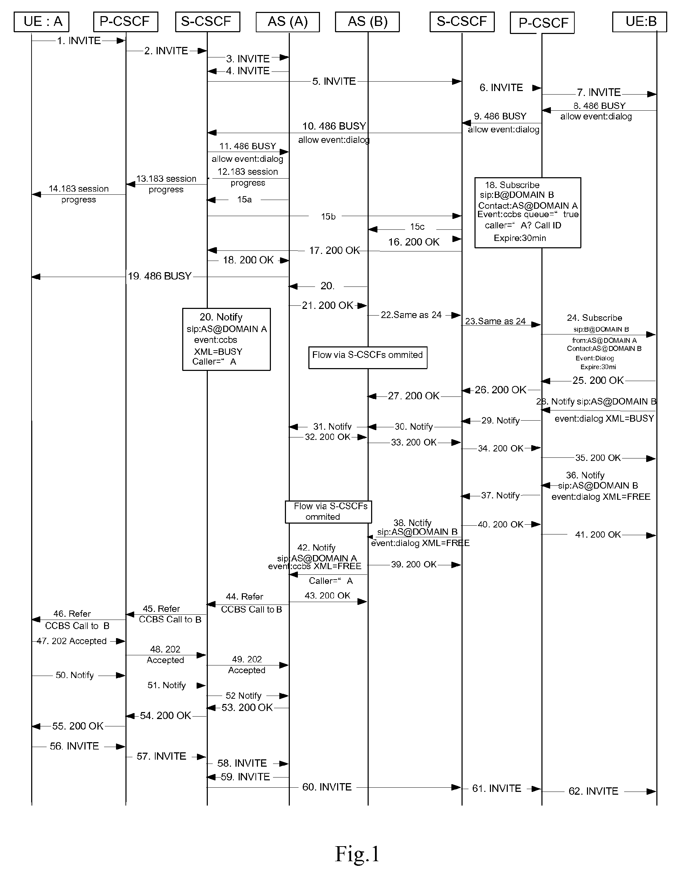

Information exchange in the existing CCBS service is as illustrated in Fig.1. Both CCBS service logics and queues are stored on an AS. A calling-side AS is introduced during initial establishment of a call to store information on service activation status and a service queue of the calling user, etc.; and a called-side AS is introduced during service activation to store information on service queue of the called user, and the calling-side AS subscribes to status of being called from the called-side AS and maintains the queue information. The user of the calling-side AS will be denoted with AS(A) and the user of the called-side AS will be denoted with AS(B) in following descriptions of steps.

In steps 1∼7, a user A initiates a normal SIP call. In steps 8∼11, the called user is busy, and the called user terminal returns 486 BUSY carrying a head field of allow event: dialog, which indicates that the terminal supports a dialog event and supports subscription to a terminal status by the use of the dialog event. In steps 12∼14, AS(A) sends 183 session progress to the terminal A. In steps 15∼18, AS(A) initiates the CCBS service subscription (Subscribe message) to AS(B) with the use of a CCBS event packet carrying a public user identifier (a calling telephone number) and a queue status (queue=true, which indicates addition of the user A into the queue) of the calling user. In step 19, AS(A) sends 486 BUSY back to the calling terminal. In steps 20 and 21, AS(B) sends to AS(A) a Notify carrying a current status of user in response to the Subscribe message. In steps 22-27, AS(B) subscribes to a terminal status at the terminal B with the use of a dialog event packet. In steps 28∼35, the terminal B reports a status of BUSY with the use of a dialog packet until the status is reported to AS(B). AS(B) reports the status of BUSY of the called to AS (A) with use of a CCBS event packet. In steps 36-43, the terminal B becomes idle and reports a status of FREE to AS(B), and AS(B) reports the status to AS(A). In steps 44-55, AS(A) instructs the user A to initiate a recall by means of the public user identifier of the user A, and information such as a called number can be carried in Refer.

In steps 56-62, the terminal A initiates a recall to the user B, and a recall instruction can be carried in a message of Invite to indicate that this call is a recall. The service will be completed normally after the caller and the called start a normal communication. After the completion of the service, the calling-side AS deletes the service information on the present AS, and instructs the called-side AS to delete the relevant queue information with use of a CCBS event packet carrying the calling number and a queue status (queue=false, which indicates deletion of the user A from the queue). This procedure (not shown in the drawings) is analogous with the steps 15∼18, and therefore the descriptions thereof are omitted.

In an existing service of CCNR (Completion of Communication on no reply), i.e., a no reply callback service, a calling user A dials a called user B but the user B does not reply, then the CCNR service is activated. The network releases the present call after a successful activation, and the user B becomes idle after initiating a communication once. At this time, the system notifies the user A; and the user A initiates a recall to the user B. The caller and the called start a normal communication after the user B replies, and the service is completed. The recall flow in the CCNR service is analogous with the above CCBS service, and therefore the descriptions thereof will be omitted.

For more specific implementations of the CCBS and CCBR service flows, please refer to the latest standard draft describing the CCBS and CCBR services in the ESTI TISPAN.

As the communication services develop continuously, an operator allows a plurality of registered terminals to share a single user identity, i.e., a public user identifier, or a telephone number as commonly referred to. For instance, a user possesses a mobile terminal and a fixed terminal, both of which use the same one telephone number (i.e., a public user identifier) for calls. It is assumed that the calling multi-terminal user activates a recall service when he uses his mobile terminal, and it indicates that he wishes that the mobile terminal would be instructed by an application server to recall when the called user is idle.

However, it can be seen from the conventional implementation of the recall service as described previously that after the recall service is activated, the application server instructs the calling user terminal to recall, according to the public user identifier of the calling user, but the application server may not locate the mobile terminal of the calling user accurately when instructing the calling user to recall because the mobile terminal and the fixed terminals of the calling user have the same public user identifier. Consequently, the conventional implementation method for the recall service can not be applied to a multi-terminal caller.

### Summary of the Invention

According to an aspect of embodiments of the invention, a method and system for acquiring routing information is provided so that a service can be processed according to the routing information in a network.

According to another aspect of embodiments of the invention, a method and device for locating a user terminal is provided so that a server can send accurately a recall instruction message to a calling user terminal having activated a recall service in the case that the calling user is a multi-terminal user.

To this end, the embodiments of the invention provide the following technical solutions.

A method for locating a user terminal, includes:
recording information on routing from a calling user terminal activating a recall service to a server; and
sending a recall instruction message to the calling user terminal activating the recall service when a recall is instructed, according to the recorded routing information.

In the embodiment of the invention, because the server records the information on routing from the calling user terminal having activated the recall service to the server, the recall instruction message can be sent accurately to the calling user terminal having activated the recall service according to the recorded routing information when the recall is instructed. Therefore, the technical solutions according to the embodiments of the invention, can be adapted to the case of the multi-terminal calling user, and the server can instruct just the terminal having activated the recall service to initiate a recall.

A device for locating a user terminal includes:
a routing information record unit, adapted to record information on routing from a calling user terminal activating a recall service to a server; and
a recall instruction unit, adapted to send a recall instruction message to the calling user terminal activating the recall service when a recall is instructed according to the recorded routing information.
With the device for locating a user terminal according to the embodiment of the invention, the recall instruction message can be sent accurately to the calling user terminal having activated the recall service according to the routing information recorded by the routing information record unit, when a recall is instructed. Therefore, the technical solution according to the embodiment of the invention can be adapted to the case of the multi-terminal calling user, and the server can instruct just the terminal having activated the recall service to initiate a recall.

A method for acquiring routing information includes:
subscribing, by a server, to registration information at a network registration unit of a user terminal;
reporting, by the network registration unit, current registration information of the user terminal to the server, the registration information including at least routing information; and
acquiring, by the server, from the received registration information, the information on routing from the user terminal to the server.

A method for acquiring routing information includes:
after receiving a registration message from a user terminal, a network registration unit sending the registration message to a server, the registration information including at least current information on routing from the user terminal to the server; and
acquiring, by the server, from the received registration message the information on routing from the user terminal to the server.

A system for acquiring routing information, includes a server and a network registration unit, wherein:
the network registration unit includes
a report unit adapted to report registration information of a user terminal to the server; and
the server includes
a routing information acquisition unit adapted to receive the registration information of the user terminal reported by the network registration unit and to acquire, from the registration information, information on routing from the user terminal to the server.

In the embodiments of the invention, the server acquires the information on routing from the user terminal to the server through subscribing to the registration information at the user terminal, or the user terminal sends on its own initiative the registration information to the server, so that the server acquires the information on routing from the user terminal to the server. With the routing information, the server not only can identify the calling user terminal having activated the recall service in the case that the calling user has a plurality of terminals, but also can handle various message services, for example, perform message format conversion or message routing, etc according to message capabilities information in the routing information.

### Brief Description of the Drawings

Fig.1 is a schematic diagram of an information exchange procedure for the service of Completion of Communication session to Busy Subscriber CCBS in the prior art;

Fig.2 is a structural diagram of a general network model of a method for locating a user terminal according to an embodiment of the invention;

Fig.3 is a schematic diagram of an information exchange procedure of a method for locating a user terminal according to a first embodiment of the invention;

Fig.4 is a schematic diagram of a flow for locating a user terminal according to the first embodiment of the invention;

Fig.5 is a schematic diagram of an information exchange procedure of the method for locating a user terminal according to a second embodiment of the invention;

Fig.6 is a schematic diagram of a flow of locating a user terminal according to the second embodiment of the invention;

Fig.7 is a schematic diagram of an information exchange procedure of the method for locating a user terminal according to a third embodiment of the invention;

Fig.8 is a schematic diagram of a flow of locating a user terminal according to the third embodiment of the invention;

Fig.9 is a schematic block diagram of a device for locating a user terminal according to an embodiment of the invention; and

Fig.10 is a schematic block diagram of a system for acquiring routing information according to an embodiment of the invention.

### Detailed Description of the Invention

The embodiments of the invention will be described in details hereinafter with reference to the drawings.

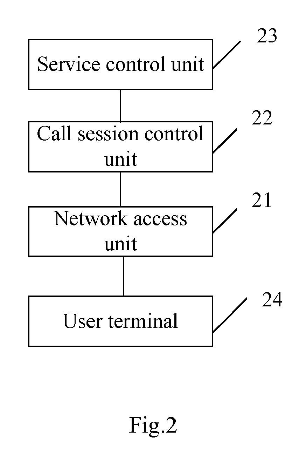

In an IMS domain, a method for acquiring information on routing from a server to a terminal is provided according to an embodiment of the invention, which involves a general network model as illustrated in Fig.2. The model includes a network access unit 21, a call session control unit 22, a service control unit 23 and a user terminal 24. The network access unit 21 enables a user to access an operator network to carry out operations such as registration, authentication and authorization. In the IMS, a P-CSCF can function as the network access unit 21. The call session control unit 22 provides functions of call control and routing relay, etc., for the user, and can trigger a call to different service control units. In the IMS, the S-CSCF can function as the call session control unit 22. The service control unit 23, which is one kind of application servers, provides various service logic control functions for the user, and presents a host implementation environment for various services. In the embodiments of the invention, the service control unit 23 processes recall services such as CCBS. In the IMS, an AS can function as the service control unit 23.

In the method according to an embodiment of the invention, the service control unit 23 stores information on routing from a calling user terminal to the service control unit 23; the routing information stored in the service control unit 23 is carried in an SIP message when the service control unit 23 instructs a recall; and the recall instruction message will be sent to the corresponding calling user terminal. The routing information includes any one or combination of the followings: public user identifier information, private user identifier information, address information of the call session control unit, address information of the network access unit, a contact address of the terminal, a Globally Routable User agent Uniform resource identifier (GRUU) of the terminal, preference setting of the terminal, message capabilities information supported by the terminal and media capabilities information supported by the terminal.

For a user with a plurality of terminals, although a same one public user identifier is shared by the plurality of terminals, each of them can be distinguished through its unique private user identifier. Upon registration with the network, the user terminals each can also be provided with a unique contact address which can be used for routing and addressing. Obviously, the service control unit 23 can satisfy the demand of directing a recall to a specified user terminal if it can acquire the contact address of the user terminal needed to be recalled.

Seemingly, when a recall service is activated, the service control unit 23 could have acquired a contact address of a calling user terminal from information relevant to a call previously initiated by the calling user terminal. As described above, however, since a contact address is obtained by allocation when the calling user terminal registers at the network, a different contact address may be obtained upon each registration. When the calling user terminal may have its contact address changed due to re-registration during a period from activating the recall service by the calling user until recalling the calling user from the network. For instance, the re-registration may occur when the user terminal roams or the user terminal restarts after being powered off, etc. Therefore, one of key technologies of the method according to the embodiments of the invention lies in how the service control unit 23 can acquire a current contact address of a user terminal when the user terminal initiates registration with the network, which will be described below in conjunction with implementations of a recall service in three different embodiments.

It shall be noted that the following respective embodiments will be applied in an IMS system by way of an example, and schematic diagrams of information exchange procedures and corresponding flow charts and literal descriptions as presented therein are merely explanations given to highlight the key means as used in the embodiments of the invention, and therefore will be neither representative of an entire call or service control flow nor exhaustive of all possible branch flows.

*The First Embodiment*

After a recall service is activated with success, an AS records information on routing from a calling user terminal to the AS during the present call, and subscribes to registration information of a calling user at an S-CSCF corresponding to the user.

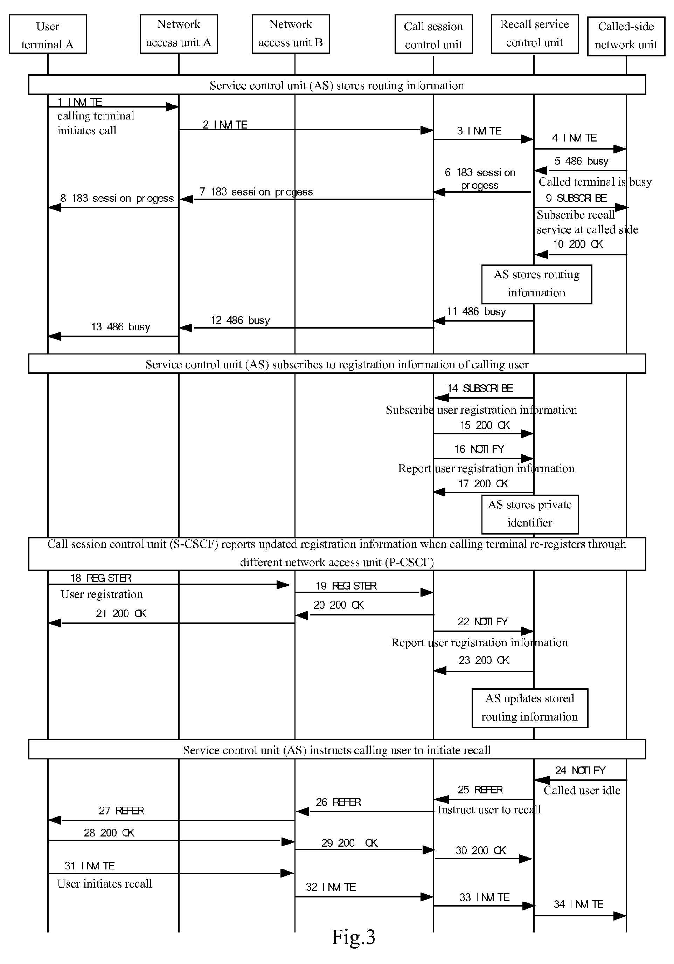

When the registration information changes due to re-registration of the terminal, the S-CSCF notifies the AS about the latest registration information, and the AS acquires current routing information of the terminal from the registration information and stores the information. The routing information stored in the AS is to be carried in an SIP message that is used to instruct a recall by the AS, and the recall instruction message will be sent to a corresponding calling terminal. With reference to Fig.3, it is a schematic diagram of an information exchange procedure in the first embodiment of the invention.

1∼4: The user terminal A (the calling terminal) initiates a normal SIP call.

5: The called user is busy and a 486 BUSY is returned from the called side.

6-8: The recalling AS sends a 183 session progress to the user terminal A.

9∼10: after receiving a service registration request from the caller, the recalling AS sends a SUBSCRIBE to an AS corresponding to the called side to subscribe to the CCBS service, and a 200 OK is returned from the called side.

The recalling AS, stores relevant information on routing from the user terminal A to the recalling AS based on contents in an INVITE message including information in header fields of Recorded-Route and of Contact or information in a header field of Via, and stores addresses of the S-CSCF and the network access unit A (P-CSCF A) and a contact address and a public user identifier of the calling terminal. The header field of Recorded-Route includes the addresses of the S-CSCF and the network access unit A (P-CSCF A), the header field of Contact includes the contact address of the calling terminal, the header field of Via includes both the addresses of the S-CSCF, the network access unit A (P-CSCF A) and the contact address of the calling terminal, and the public user identifier of the calling terminal is included in a header field of P-Asserted-Identity.

The recalling AS in the embodiment of the invention has activated the recall service of the calling user. A recall can be identified by means of public user identifiers of the caller and the called. The recalling AS may also allocate a recall identifier for the present recall and send the recall identifier to a called-side net element via a SUBSCRIBE message.

11∼13: The recalling AS sends a 486 BUSY message to the user terminal A.

14∼15: The recalling AS sends a SUBSCRIBE message to the S-CSCF for subscription to the registration information of the user, and the S-CSCF responds with a 200 OK message. The SUBSCRIBE message carries an extension registration information event packet *reginfo* requiring that the recalling AS is notified upon change of a signaling path registered (i.e. the routing information) by the user terminal A. An illustrative example is as follows:
Event: reginfo

16∼17: The S-CSCF accepts the subscription and sends a NOTIFY message reporting the present registration information, including the public user identifier of the calling user: sip:joe@example.com, the contact address of the calling terminal: sip:joe@pc1.example.com, a private user identifier of the calling terminal: sip:joe_private@example.com and the address of the network access unit: A (P-CSCF) with which the calling terminal registers: sip:pcscf1.example.com, and the recalling AS responds with a 200 OK message and records such registration information. As can be seen, the registration information actually includes the current routing information of the calling terminal.

It shall be noted that the recorded registration information further includes a private user identifier of a terminal that is not included in the registration information recorded in the previous steps 9∼10. The private user identifier of a terminal is used to distinguish respective terminals in the case that the user has a plurality of registered terminals.

Since the call session control unit reports registration information of all registered terminals of the calling user, the calling AS needs to search out the registration information of the registered terminal that has activated the recall service according to the public user identifier and the contact addresses of the terminals recorded previously, and this is also a reason for the recalling AS to record in the steps 9∼10 the contact addresses of the registered terminals that have activated a recall service. Since this is a synchronous notification message after the subscription is accepted, the registered signaling path of the user terminal does not change, and therefore at this time, the recalling AS may store only the private user identifier of the calling terminal.

An illustrative example of the contents carried in the NOTIFY message in the method according to the embodiment of the invention is as follows:

```
      Event: reginfo
      <?xml version="1.0"?>
      <reginfo xmlns="urn:ietf:params:xml:ns:reginfo"
      xmlns path="urn:ietf:params:xml:ns:pathinfo"
      version="0" state="full">
      <registration aor="sip:joe@example.com" id="a7" state="active">
      contact id="76" state="active" event="registered" duration-registered="0">
      <uri>sip:joe@pc1.example.com</uri>
      <path:p-uri>sip: joe_private@example.com </p-uri>
      < path:path-uri>sip:pcscf1.example.com</path-uri>
      </contact>
      </registration>
      </reginfo>
```

18∼21: The network access point of the calling terminal changes when the calling terminal is roaming, and the calling terminal initiates registration through another network access unit B(P-CSCF). The S-CSCF responds with a 200 OK message. At this time, both the contact address of the calling terminal and the address of the P-CSCF change.

22∼23: The S-CSCF sends a NOTIFY message reporting updated registration information including the public user identifier of the calling user: sip:joe@example.com, the private user identifier of the calling terminal: sip:joe_private@example.com, an updated contact address of the calling terminal: sip:joe@pc2.example.com and an address of the network access unit B (P-CSCF) with which the calling terminal registers: sip:pcscf2.example.com, and the recalling AS responds with a 200 OK message.

As can be seen, the contact address of the calling terminal at this time has been changed, and the recalling AS searches out the calling terminal that has recorded recall routing information according to the public user identifier and the private user identifiers in the registration message, and updates the relevant routing information.

Although the private user identifier of the terminal in the method according to the embodiment of the invention does not belong to the information on direct routing from the terminal to the recalling AS, the private user identifier is an unchanged identifier of the registered terminal and is needed to search for the registration information changed after re-registration. Since the contact address (routing information) of the terminal may change upon each registration, the private user identifier is necessarily used to search out the user terminal the stored routing information of which needs to be updated.
An illustrative example of relevant parameters carried in the NOTIFY message in the method according to the embodiment of the invention is as follows:

```
      Event: reginfo
      <?xml version="1.0"?>
      <reginfo xmlns="urn:ietf:params:xml:ns:reginfo"
      xmlns path="urn:ietf:params:xml:ns:pathinfo"
     version="1" state="partial">
      <registration aor="sip:joe@example.com" id="a7" state="active">
      <contact id="76" state="active" event="registered" duration-registered="0">
      <uri>sip:joe@pc2.example.com</uri>
      <path:p-uri>sip: joe_private@example.com </p-uri>
      <path:path-uri>sip:pcscf2.example.com</path-uri>
      </contact>
      </registration>
      </reginfo>
```

24: When the called user becomes idle, the called side net element sends to the calling AS a NOTIFY message reporting the status, and the message caries the public user identifier of the caller and the called and possibly the recall identifier allocated previously.

25∼29: The calling AS finds out a call needed to be applied and searches out the current routing information according to the public user identifiers of the caller and the called or alternatively the recall identifier, and sends a REFER message to the calling terminal, instructing the terminal to initiate a recall, and the calling terminal responds with a 200 OK message. The REFER message is routed according to the routing information stored in the recalling AS. The routing information indicates a signaling path of the calling terminal, including the address of the call session control unit, the address of the network access unit B (P-CSCF) and the contact address of the calling terminal. Then the REFER message is sent to the calling terminal that has registered with the recall service through the S-CSCF and the network access unit B (P-CSCF). An illustrative example of relevant parameters carried in the REFER message is as follows:

```
      Refer: sip:joe@pc2.example.com
      Route: <sipacscf.example.com;lr>, <sip:pcscf2.example.com;lr>
      To: sip: joe@.example.com
```

30∼33: The calling terminal initiates a recall. When the recall is successful, the recalling AS deletes the stored routing information and also cancels subscription to the registration information of the calling terminal.

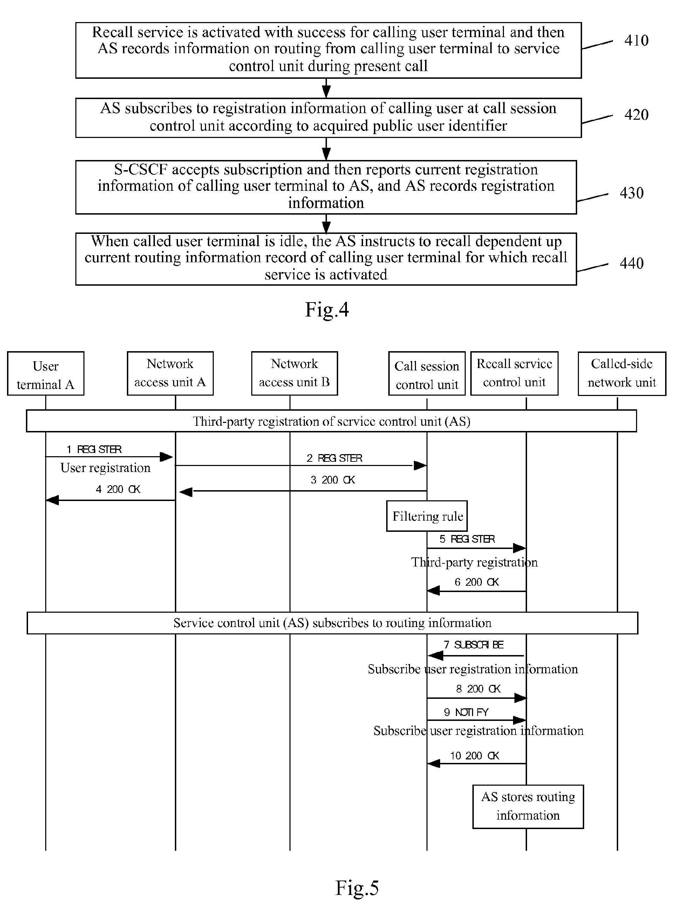

Further with reference to Fig.4, it is a schematic diagram of the flow according to the first embodiment of the invention. Specific descriptions of the flow will be focused on consecutive logic relationships, and the description of the prior art related to the technical solution of the embodiment of the invention will be omitted here.

In step 410, after a calling user terminal activates a recall service successfully, the AS records information on routing from the calling user terminal to the AS during the present call. The routing information includes at least a public user identifier and a contact address of the calling user terminal and of course may also include addresses of access network units P-CSCF and S-CSCF of the calling user terminal.

In step 420, the AS subscribes to registration information of the calling user at the S-CSCF according to the public user identifier acquired in the step 410. The registration information includes at least the information on routing from the calling user terminal to the AS. In other words, the AS needs to subscribe to at least the routing information at the S-CSCF and may also subscribe to the registration information including the routing information. It shall be noted that although in the present embodiment the AS subscribes to the registration information at the S-CSCF, the S-CSCF is not meant to limit the present invention. Any net element may handle network registration of the user terminal as long as this net element (logically referred to as a network registration unit) is capable of providing the AS with the registration information. This similarly applies to the following embodiments.

In step 430, after the S-CSCF accepts the subscription, it reports to the AS the current registration information of the calling user terminal, and the AS records the information. The registration information reported to the AS includes at least the public user identifier, the private user identifier and the contact address of the calling user terminal and may also include the addresses of the P-CSCF and the S-CSCF. Since this is a synchronous notification message after the subscription, a path for the registration information of the calling user terminal (the contact address, the address of the access P-CSCF, etc.) has not changed, and therefore in this step the AS may store only the private user identifier of the calling terminal.

It shall be noted that the AS records routing information of a lot of calling user terminals since it serves all of the user terminals within the network, especially in the case that a calling user has a plurality of terminals (with the same public user identifier and different private user identifiers). The S-CSCF reports to the AS the registration information of each of the registered terminals corresponding to the calling user, because the AS subscribes to the registration information according to the public user identifier.

So when the private user identifier is recorded in step 430, the user terminal to which the private user identifier belongs should be found out. Specifically, the AS searches out the corresponding routing information record from the recorded routing information of all the user terminals, according to the public user identifier and the contact addresses of the calling user terminals in the registration information reported from the S-CSCF in step 430. The calling user terminal corresponding to the routing information record is just the calling user terminal that has activated the recall service, and the private user identifier carried in the registration information in step 430 is possessed just by the calling user terminal. At this time, the AS has acquired and recorded the routing information and the private user identifier of the calling user terminal that has activated the recall service.

In step 440, if the calling user terminal having activated the recall service re-registers, the S-CSCF reports updated registration information to the AS. The registration information includes at least the public user identifier, the private user identifier and the contact address of the calling user terminal, and generally, it also includes the address of the access net element P-CSCF. Because the calling user terminal re-registers and therefore its contact address has already changed, and the address of the access network unit P-CSCF may also have changed.

In step 450, the AS searches out the calling user terminal that has recorded the recall routing information according to the public user identifier and the private user identifier in the updated registration information previously mentioned, and updates the contact address and possibly the address of the P-CSCF in its original routing information record.

In step 460, when the called user terminal becomes idle, the AS instructs a recall based on the current routing information record of the calling user terminal having activated a recall service. Specifically, the AS instructs the calling user terminal to initiate a recall through an SIP message which carries the current routing information corresponding to the calling user terminal having activated the recall service. Generally, the AS may identify a recall with the public user identifiers of the caller and the called, and may also allocate a recall identifier for each current recall.

*The Second Embodiment*

AS acquires a public user identifier of a terminal through a third-party registration when the terminal registers. Then the AS subscribes to registration information of a calling user at S-CSCF, and acquires a private user identifier and a contact address of the user terminal, an address of the network access unit, etc., from the registration information. It shall be noted that the AS in the context is the appellation of an AS that performs controlling when a recall service is carried out, and since a caller and a called each have a corresponding AS, and theoretically the AS for the caller and the called both can function as a service control unit. Therefore, the appellation adopted in the descriptions of the embodiments of the invention may refer to a working service control unit for the caller or the called.

After the recall service is activated, the AS identifies, in the recorded routing information of the terminal, the terminal having activated the service by using the contact address of the terminal. If the terminal re-registers and the registration information changes, the S-CSCF will always notify the serving AS about the latest registration information. The AS instructs a recall through an SIP message carrying the routing information stored in the AS, and the recall instruction message is sent to the corresponding calling terminal. With Reference to Fig.5, it is a schematic diagram of an information exchange procedure in the second embodiment of the invention.

Specific descriptions are as follows.

1∼4: The user terminal A (the calling terminal) initiates a registration through the network access network (P-CSCF), and the S-CSCF responds with a 200 OK message.

5∼6: The S-CSCF generates and sends a third-party registration request REGISTER to the recalling AS after the user terminal subscribing to a recall service registers successfully with the S-CSCF in accordance with a trigger rule on the S-CSCF. The REGISTER message carries a public user identifier of the terminal. The recalling AS returns a 200 OK message and stores the public user identifier of the terminal which is included in a header field of To into the REGISTER request.

7∼8: Upon success of the third-party registration, the recalling AS acquires the public user identifier of the user subscribing to the recall service and immediately subscribes to registration information of the user at the S-CSCF. The subscription message SUBSCRIBE carries an extension registration information event packet reginfo.

9∼10: The S-CSCF accepts the subscription and sends a message NOTIFY reporting the present registration information, including the public user identifier of the calling user: sip:joe@example.com, a contact address of the calling terminal: sip:joe@pc1.example.com, a private user identifier of the calling terminal: sip:joe_private@example.com and an address of the network access unit A (P-CSCF) with which the calling terminal registers: sip:pcscf1.example.com, and the recalling AS responds with a 200 OK message and records such registration information. For an illustrative example of relevant parameters carried in the message NOTIFY, the steps 16∼17 in the first embodiment may be referred to.

Thereafter, the S-CSCF always reports currently latest registration information to the recalling AS once the user terminal re-registers, and the steps 18∼23 in the embodiment may be referred to for a specific procedure thereof.

If the user terminal initiates a call to a busy subscriber, then a recall service is activated. Since the recalling AS always stores routing information of the current user terminal after registration, after the recall service is activated, the recalling AS needs to identify in the recorded terminal routing information the terminal having activated the recall service by using the contact address of the terminal. So when the called user becomes idle, the routing information currently stored in the recalling AS is always carried in an SIP message instructing the recall, so that the recall instruction message is sent to the corresponding calling terminal. The steps 1∼13 (a caller calls a called terminal who is busy, and a recall service is activated) and the steps 24∼34 (the recall service is applied when the called terminal becomes idle) can be referred to for a specific procedure thereof.

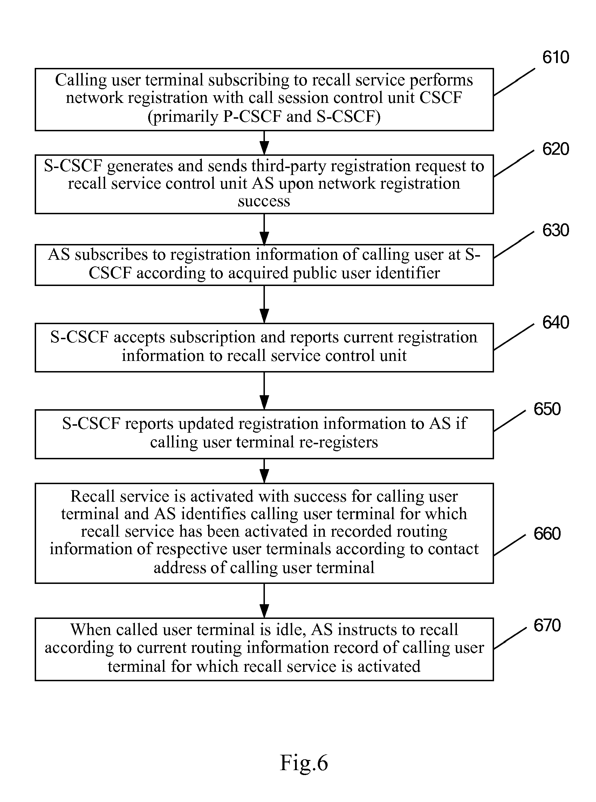

Next with reference to Fig.6, it is a schematic diagram of the flow according to the second embodiment of the invention. Specific descriptions of the flow will be focused on consecutive logic relationships, and detailed descriptions in the prior art related to the technical solution of the embodiment of the invention will be omitted here.

In step 610, a calling user terminal subscribing to a recall service performs network registration with the call session control unit CSCF (primarily P-CSCF and S-CSCF).

In step 620, upon success of a network registration, the S-CSCF generates and sends to the AS a third-party registration request including at least a public user identifier of the calling user terminal (the service control unit is an abstract description of an AS in the context and particularly refers to an AS handling the recall service).

In step 630, the AS subscribes to registration information of the calling user at the S-CSCF according to the public user identifier acquired in the step 620, and the registration information includes at least routing information.

In step 640, after accepting the subscription, the S-CSCF reports to the service control unit the current registration information including at least the public user identifier, a contact address and a private user identifier of the calling user terminal. It shall be noted that, because the subscription is made based on the public user identifier, the S-CSCF reports registration information of all terminals of the calling user to the AS in the case that the calling user has a plurality of terminals, including both the registration information of the user terminal having activated the recall service and registration information of a user terminal that has not activated the recall service.

In step 650, if the calling user terminal re-registers, the S-CSCF reports updated registration information to the AS, and the AS updates the routing information of the respective calling user terminals, usually the contact address and the address of the P-CSCF in the routing information according to the registration information. It can be known from above that the AS has recorded the current routing information of the respective user terminals having subscribed the recall service. It shall be noted that the private user identifier is needed to distinguish each calling user terminal during the routing information is updated. This is because that after the same user terminal re-registers, the contact address and the address of the access network unit P-CSCF of a user terminal generally change but its private user identifier will not change.

In step 660, after the recall service is activated with success for a calling user terminal, the AS identifies in the recorded routing information of the respective user terminals the calling user terminal having activated the recall service according to the contact address of the calling user terminal.

In step 670, when the called user terminal becomes idle, the AS instructs a recall according to the current routing information record of the calling user terminal having activated the recall service. Specifically, the AS instructs a recall through an SIP message carrying the current routing information corresponding to the calling user terminal having activated the recall service, and the call instruction message is sent to the corresponding call terminal, instructing the calling user terminal to initiate a recall.

As can be seen, in the first and the second embodiments, the occasions at which the AS is triggered to initiate subscription to the registration information of the user are different. In the first embodiment, the subscription is triggered upon activation of the recall service; while in the second embodiment, the subscription is triggered upon success of a third-party registration. With the feature of the first embodiment, the AS subscribes to registration information of a user having activated a recall service, while with the feature of the second embodiment, the AS needs to store registration information of all users having subscribed a recall service. Therefore the amount of information to be stored in the first embodiment is less than that in the second embodiment.

*Third Embodiment*

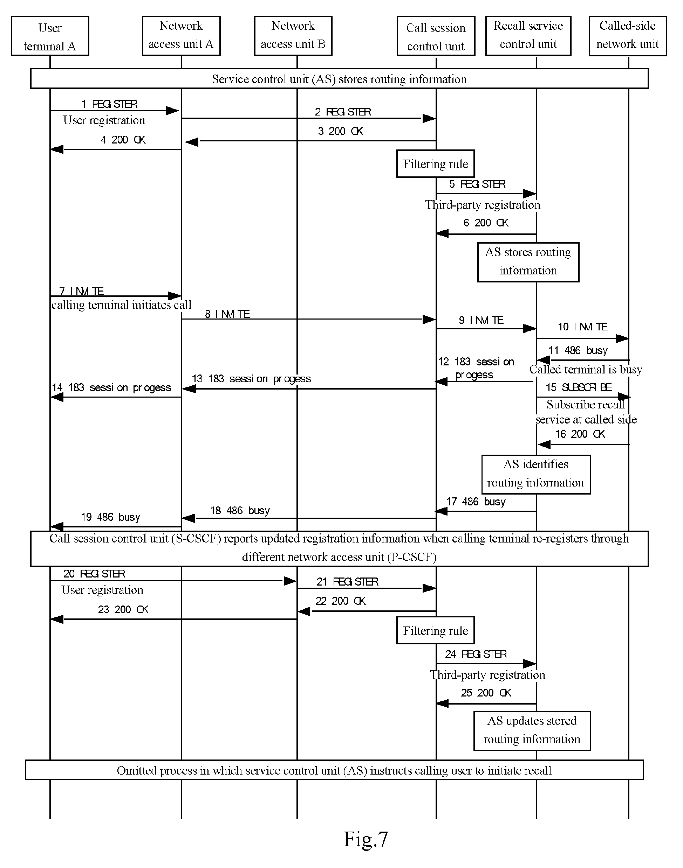

A terminal of a user subscribing to a recall service registers with a service control unit (AS) through a third-party registration and reports information on routing from a calling user terminal to the AS and the AS stores such information. After recall service is activated, the AS identifies in the recorded terminal routing information the terminal having activated the service by using a contact address of the terminal. When the terminal re-registers and the registration information changes, the AS updates the stored information according to the content of a registration message. The AS instructs a recall with an SIP message carrying the routing information stored in the AS, and the recall instruction message is sent to the corresponding calling terminal. With reference to Fig.7, it is a schematic diagram of information exchange procedure in the embodiment of the invention.

Specific descriptions are as follows.

1∼4: A user terminal A (the calling terminal) initiates registration through the network access unit (P-CSCF), and the call session control unit (S-CSCF) responds with a 200 OK message.

5∼6: The S-CSCF generates and sends a third-party registration request REGISTER to the recalling AS after the terminal of the user subscribing to a recall service registers successfully with the S-CSCF in accordance with a trigger rule on the S-CSCF. An extended header field Contact or the like or an added header field in the message REGISTER carries an address of the S-CSCF scscf.example.com, a private user identifier of the terminal joe_private@example.com, a contact address of the terminal joe@pc1.example.com and an address of the access control unit A (P-CSCF) pcscf1.example.com. The recalling AS responds with a 200 OK message and stores the public user identifier, the private user identifier and the terminal contact address of the terminal and the addresses of the P-CSCF and the S-CSCF. Now, the recalling AS described in the embodiment of the invention stores information on routing from the terminal of the subscribing user to the service control unit and the private user identifier of the terminal.

An illustrative example of relevant parameters carried in the message REGISTER is as follows:
From: sip: scscf.example.com
To: sip: joe@.example.com
Contact: sip: scscf.example.com; p-uri=sip: joe private@example.com; path-uri=sip:pcscf1.example.com; uri = sip:joe@pc1.example.com

7∼10: The calling user initiates a normal SIP call.

11: Called user is busy, and a 486 BUSY message is returned from the called side.

12∼14: The recalling AS sends a 183 session progress message to the calling terminal.

15∼16: After receiving a service registration request from the caller, the recalling AS sends a SUBSCRIBE message to an AS corresponding to the called side, subscribing to the CCBS service. A 200 OK message is returned from the called side.

The recalling AS can acquire the public user identifier and the terminal contact address of the calling terminal from a message INVITE and searches out a routing record of the terminal having activated the service from the stored routing information according to these two addresses.

17∼19: The recalling AS sends a 486 BUSY message to the calling terminal.

20∼23: The network access point changes when the calling terminal moves. The calling terminal initiates registration through another network access unit B (P-CSCF). The S-CSCF responds with a 200 OK message. At this time, both the contact address of the calling terminal and the address of the P-CSCF change.

24∼25: The S-CSCF generates and sends to the AS a third-part registration request REGISTER which carrying new routing information including the public user identifier of the calling user sip:joe@example.com, the private user identifier of the calling terminal sip:joe_private@example.com, an updated contact address of the calling terminal sip:joe@pc2.example.com, an address of the network access unit B (P-CSCF) with which the calling terminal registers sip:pcscf2.example.com and the address of the call session control unit S-CSCF, and the recalling AS responds with a 200 OK message. The recalling AS can search out the user terminal that has recorded recall routing information according to the public user identifier and the private user identifier in the registration information and updates the relevant routing information.

An illustrative example of relevant parameters carried in the message REGISTER is as follows:
From: sip: scscf.example.com
To: sip: joe@.example.com
Contact: sip: scscf.example.com; p-uri=sip: joe_private@example.com;
path-uri=sip:pcscf2.example.com; uri = sip:joe@pc2.example.com

Subsequent processes in which the recalling AS instructs a recall and the calling terminal initiates a call are identical to those in the first embodiment, and therefore descriptions thereof will be omitted here. After the recall succeeds, the recalling AS deletes the identification of the routing information of the terminal that is made upon activation of the service.

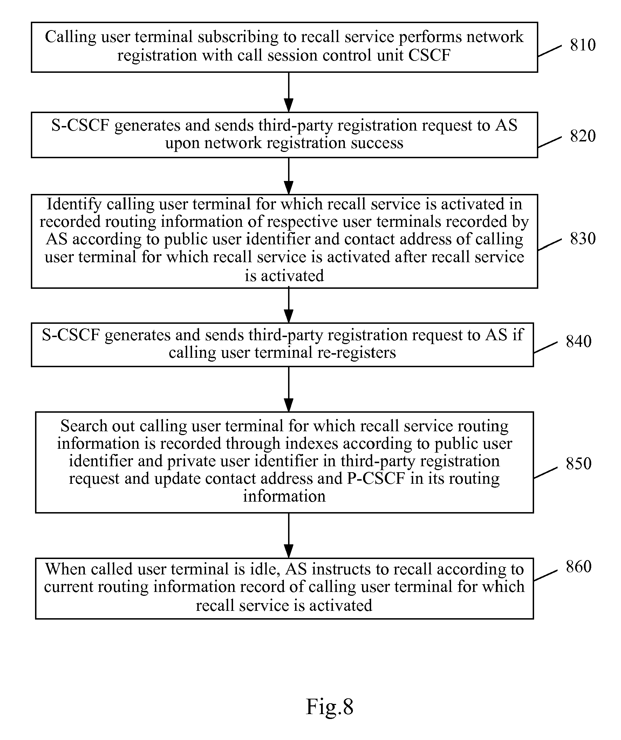

Next with reference to Fig.8, it is a schematic diagram of the flow according to the third embodiment of the invention. Specific descriptions of the flow will be focused on consecutive logic relationships, and detailed descriptions of the prior art related to the technical solution of the embodiment of the invention will be omitted here.

In step 810, a calling user terminal subscribing to a recall service performs network registration in the call session control unit CSCF (primarily P-CSCF and S-CSCF).

In step 820, after the network registration succeeds, the S-CSCF generates and sends to the AS a third-party registration request including at least a public user identifier, a current contact address and a private user identifier of the calling user terminal, and the AS stores the information.

In step 830, after the recall service has been activated, the AS identifies in the recorded routing information of each of the user terminals the calling user terminal having activated the recall service by using the public user identifier and the contact address of the calling user terminal having activated the recall service.

In step 840, if the calling user terminals re-register, the S-CSCF generates and sends to the AS a third-party registration request including at least the public user identifier, the private user identifier and the current contact address of the calling user terminal and also possibly the address of the access network unit P-CSCF. Generally, after the user terminal re-registers, the contact address of the user terminal and the address of the access network unit P-CSCF may change.

In step 850, the calling user terminal that has recorded recall service routing information is searched out according to the public user identifier and the private user identifier in the third-party registration request in step 840, and the contact address and the P-CSCF in the routing information are updated. If it is found through search that the recall service has not been activated by the user terminal that re-registers, the AS may or may not update a routing information record of the calling user terminal.

In step 860, when the called user terminal becomes idle, the AS instructs a recall according to the current routing information record of the calling user terminal having activated the recall service. The AS instructs a recall with an SIP carrying the current routing information corresponding to the calling user terminal having activated the recall service, and the recall instruction message is sent to the corresponding call terminal, instructing the calling user terminal to initiate a recall.

It can be seen through summarization of the above three embodiments that, although the embodiments of the invention have presented the procedures for implementing a recall service, one of the key points of the methods according to the embodiments of the invention lies in how the service control unit acquires current information on routing from a user terminal to the service control unit, including an address of the call session control unit, an address of the network access unit and a contact address of the user terminal. The three different embodiments have presented the methods for acquiring the above routing information, which can be summarized as the following two approaches.

1. The AS subscribes to registration information at the S-CSCF with which the terminal registers, and the S-CSCF reports current information on routing from the terminal to the AS. When the terminal re-registers, the S-CSCF reports updated information on routing from the terminal to the AS.

Specifically, after the terminal registers successfully with the call session control unit, the call session control unit initiates a third-party registration at the service control unit. After receiving the registration message, the service control unit sends to the call session control unit a subscription message SIP SUBSCRIBE carrying a registration information event packet, and the call session control unit sends to the service control unit a notification message SIP NOTIFY carrying the information on routing from the terminal to the service control unit. The service control unit can also acquire the address of the call session control unit in interaction of an SIP message during setting up a session, and thereafter sends subscription to the session control unit.

Particularly, the registration information event packet is used to subscribe to registration information related to the registered user, including the routing information, and the registration information event packet can be a newly extended event packet and can also be an extended use of a registration event packet (reg) defined in the existing standard. Further, the service control unit can also subscribes to only the routing information at the call session control unit in a way that an extended event packet is used to instruct subscription to the routing information.

2. Upon reception of a registration message from the terminal, the S-CSCF sends to the service control unit the registration message carrying current information on routing from the terminal to the AS. When the terminal re-registers, the S-CSCF reports updated information on routing from the terminal to the AS through third-party registration.

The above routing information can also be a GRUU of the terminal, in addition to the above contact address of the terminal. In the case of the user having a plurality of terminals, the GRUU can also be used for routing to a terminal specified by the GRUU. Further, the above routing information includes preference setting of the terminal (i.e., terminal capabilities), such as terminal capabilities supporting video, short message, and etc. Alike, the preference setting of the terminal can also be used for routing to a terminal specified by the preference setting, such as a terminal supporting video capabilities. In one word, a server such as an AS in an IMS network can route a specific message to a specified user terminal through routing information in but not limited to the following forms: first, the routing information includes at least a public user identifier and a contact address of the user terminal; second, the routing information includes at least a GRUU; and third, the routing information includes at least a public user identifier of the user terminal, a private user identifier of the user terminal, an S-CSCF address and an P-CSCF address. Although generally, the private user identifier is not used for direct routing, but it can be used for indexing so as to update the routing information, and therefore can also be referred as one of indirect routing information. Preference parameters of the user can be used for routing selection.

It can be seen that, according to embodiments of the invention, various services can be achieved through acquiring and recording information on routing from the calling user terminal to the server. The routing information can include one or any combination of the following: information on a public user identifier, information on a private user identifier, information on an address of the S-CSCF, information on an address of the P-CSCF, a contact address of the terminal, a GRUU of the terminal, preference setting of the terminal, information on message capabilities supported by the terminal and information on media capabilities supported by the terminal. The handling of service includes one or any combination of the following: the network sends accurately a recall instruction message to a calling user terminal having activated a recall service according to routing information of the terminal; the network sends a message to a user terminal supporting a message format according to routing information of the terminal; and the network converts a message to be in a format supported by a user terminal and sends the message to the terminal according to routing information of the terminal.

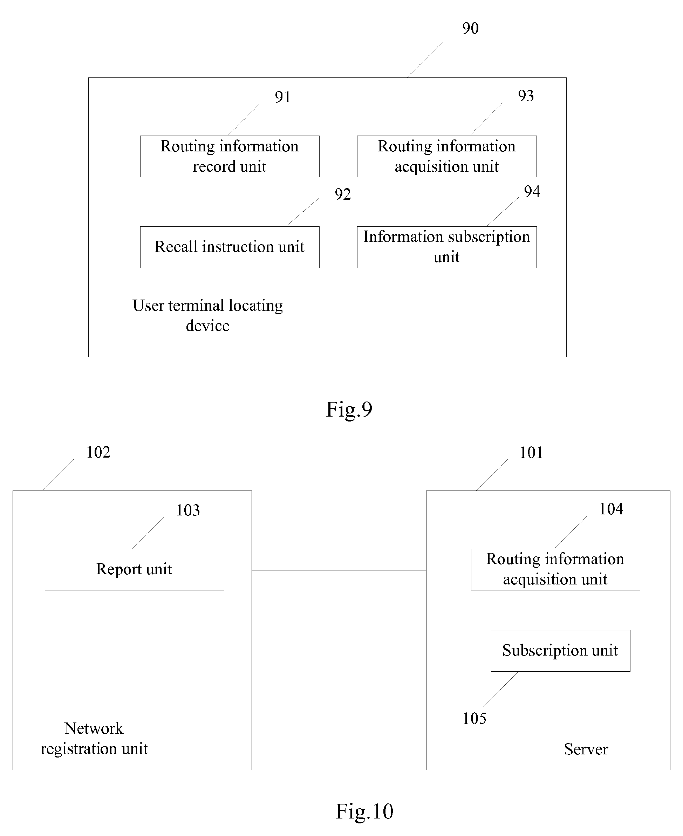

Referring to Fig.9, it is a schematic block diagram of a device for locating a user terminal according to an embodiment of the invention.

The device 90 includes a routing information record unit 91 and a recall instruction unit 92. The routing information record unit 91 is adapted to record information on routing from a calling user terminal having activated a recall service to the server, and the recall instruction unit 92 is adapted to send a recall instruction message to the calling user terminal having activated the recall service according to the recorded routing information when instructing a recall. The routing information includes one or any combination of the following: information on a public user identifier, information on a private user identifier, information on an address of the call session control unit, information on an address of the network access unit, a contact address of the terminal, a GRUU of the terminal, preference setting of the terminal, information on message capabilities supported by the terminal and information on media capabilities supported by the terminal.

The device 90 can acquire the information on routing from the calling user terminal to the server in many ways. For example, a routing information acquisition unit 93 is provided in the device 90 and acquires the information on routing from the calling user terminal to the server through third-party registration message. For instance, after the calling user terminal registers with the call session control unit to which it belongs, the call session control unit sends the information on routing from the calling user terminal to the server to the device 90, and the routing information acquisition unit 93 receives and passes the routing information to the information record unit 91. In another example, an information subscription unit 94 is provided in the device 90 to subscribe to registration information at a network registration unit (e.g., the call session control unit), and in response to the subscription, the network registration unit sends to the device 90 the information on routing from the calling user terminal having activated the recall service to the server, and the routing information acquisition unit 93 receives and passes the routing information to the routing information record unit 91.

The device 90 can acquire the public user identifier of the calling user terminal during message interaction for setting up a session after the recall service is activated. The device 90 can also acquire the public user identifier of the calling user terminal through a third-party registration message after the user terminal subscribing to the recall service performs network registration. Thus, the information subscription unit 94 can subscribe to the registration information at the network registration unit according to the public user identifier.

The calling user terminal may have a varying network access point when it moves due to mobility of the terminal. At this time the calling user terminal may initiate registration again, and the contact address of the calling terminal changes. The routing information acquisition unit 93 may receive again the information on routing from the calling user terminal to the server and update its recorded routing information of the calling user terminal, so that the recall instruction unit 92 accurately sends a recall instruction message to the calling user terminal having activated the recall service according to the recorded routing information.

With the device for locating a user terminal according to the embodiment of the present invention, a recall instruction message can be sent accurately to a calling user terminal having activated a recall service when a recall is instructed in the case of a multi-terminal calling user.

Referring to Fig.10, it is a schematic block diagram of a system for acquiring routing information according to an embodiment of the invention.

The system includes a server 101 and a network registration unit 102. The network registration unit 102 includes a report unit 103 adapted to report registration information of a user terminal to the server 101.The server 101 includes a routing information acquisition unit 104 adapted to receive the registration information of the user terminal reported from the network registration unit 102 and to acquire routing information of the user terminal from the registration information. The routing information includes one or any combination of the following: information on a public user identifier, information on a private user identifier, information on an address of the call session control unit, information on an address of the network access unit, a contact address of the terminal, a GRUU of the terminal, preference setting of the terminal, information on message capabilities supported by the terminal and information on media capabilities supported by the terminal.

In this embodiment, the network registration unit 102 reports the registration information of the user to the server 101 through the report unit 103 after the user terminal registers. The registration information includes at least the routing information of the user terminal. That is, the network registration unit 102 reports on its own initiative the registration information of the user terminal to the server 101.

Additionally, a subscription unit 105 can also be provided on the server 101 to subscribe to the registration information of the user terminal at the network registration unit 102. Thus, in response to the subscription, the report unit 103 reports the registration information of the user terminal to the server 101. If the server 101 does not subscribe to registration information of the user terminal at the network registration unit 102, then the report unit 103 will not report registration information of the user terminal to the server 101 even if the user terminal has been registered.

Of course, a record unit (not shown) can also be provided on the server 101 to record the routing information of the user terminal acquired by the routing information acquisition unit 104.

With the system for acquiring routing information according to this embodiment, the network registration unit can notify the server about routing information of a user terminal so that the right routing information of the calling user terminal can be provided for the server to instruct a recall.

The system according to the embodiment of the invention can not only be applicable for locating a calling user terminal as described previously but also be applicable for handling other service. For instance in the case of transmission of a message service, a message service server acquires information on message capabilities supported by a terminal through inquiring the routing information record unit 91, and the message service server selects an appropriate terminal as a destination terminal for transmission of the message service according to the information on message capabilities supported by the terminal, or the message service server converts a message to be in a message format supported by the terminal and sends the message to the destination terminal according to the information on message capabilities supported by the terminal.

The technical solutions according to the embodiments of the invention are not limited to applications to various recall services but can also be applicable to other services requiring acquisition of routing information, such as routing to a terminal specifying preference setting/capabilities as described previously, etc. In other words, the technical solutions according to the embodiments of the invention can be applied in substantially any techniques where terminal routing is required to be specified. The terminal can be a calling terminal for a recalling described previously and can also be an ordinary calling or called terminal. The routing information can be used by the service control unit directly for routing and can also be used indirectly for routing, for instance, can be used as a judgment criteria (e.g., a private user identifier), etc. Further, the service control unit to which the solutions according to the embodiments of the invention can be applied will be not merely the service control unit described previously and can also be any kind of IMS application server requiring routing information, such as a short message server.

The methods provided according to the embodiments of the invention can be used to implement a recall to an initial calling terminal upon initiation of the recall in the case of the caller with a plurality of terminals. These technologies can also be applicable for other recall services like CCNR and the like, and thus can optimize user's experience of the services and enrich application scenarios of the services.

It shall be appreciated that the above descriptions of the embodiments are in details and shall not be considered as limiting the scope of the invention which shall be defined as the claims appended to the invention. Those skilled in the art will be aware of that the inventive method for acquiring current information on routing from a user terminal to the server can be applicable for a recall service but shall not be limited thereto.

## Claims

1. A method for locating a user terminal, comprising:
recording information on routing from a calling user terminal activating a recall service to a server; and
sending a recall instruction message to the calling user terminal activating the recall service when a recall is instructed, according to the recorded routing information.

2. The method for locating a user terminal according to claim 1, further comprising:
acquiring the routing information from the calling user terminal activating the recall service to the server through subscribing to registration information at a network registration unit.

3. The method for locating a user terminal according to claim 2, wherein the process of subscribing to the registration information at the network registration unit comprises:
acquiring, by the server, a public user identifier of the calling user terminal; and
subscribing to the registration information at the network registration unit by means of the public user identifier.

4. The method for locating a user terminal according to claim 2, wherein the process of acquiring the public user identifier of the calling user terminal comprises:
acquiring the public user identifier of the calling user terminal during message exchanges for establishment of a session, after the recall service is activated; or
acquiring the public user identifier of the calling user terminal through a third-party registration message after the user terminal subscribing to the recall service performs a network registration.

5. The method for locating a user terminal according to claim 1, further comprising:
acquiring the routing information from the calling user terminal activating the recall service to the server through a third-party registration message.

6. The method for locating a user terminal according to any one of claims 1 to 5, further comprising:
updating a routing information record for the calling user terminal if the calling user terminal activating the recall service re-registers.

7. The method for locating a user terminal according to claim 6, wherein the process of updating the routing information record comprises:
acquiring a private user identifier of the calling user terminal activating the recall service through subscribing to the registration information at the network registration unit or through a third-party registration;
searching out an existing original routing information record of the calling user terminal by means of the public user identifier and the private user identifier of the calling user terminal which re-registers; and
updating the original routing information record according to current routing information of the calling user terminal after re-registration.

8. A device for locating a user terminal, comprising:
a routing information record unit, adapted to record information on routing from a calling user terminal activating a recall service to a server; and
a recall instruction unit, adapted to send a recall instruction message to the calling user terminal activating the recall service when a recall is instructed according to the recorded routing information.

9. The device for locating a user terminal according to claim 8, further comprising:
a routing information acquisition unit, adapted to acquire the information on routing from the calling user terminal activating the recall service to the server.

10. The device for locating a user terminal according to claim 9, further comprising:
an information subscription unit, adapted to subscribe to registration information at a network registration unit.

11. A method for acquiring routing information, comprising:
subscribing, by a server, to registration information at a network registration unit of a user terminal;
reporting, by the network registration unit, current registration information of the user terminal to the server, the registration information comprising at least routing information; and
acquiring, by the server, from the received registration information the information on routing from the user terminal to the server.

12. The method according to claim 11, further comprising:
reporting, by the network registration unit, updated information on routing from the user terminal to the server when the user terminal re-registers.

13. The method according to claim 11, wherein the process of subscribing to the registration information comprises:
acquiring, by the server, a public user identifier of the user terminal and subscribing to the registration information at the network registration unit by means of the public user identifier; or
acquiring, by the server, a public user identifier of the user terminal through a third-party registration message after the user terminal performs network registration, and subscribing to the registration information at the network registration unit by means of the public user identifier.

14. A method for acquiring routing information, comprising:
after receiving a registration message from a user terminal, a network registration unit sending the registration message to a server, the registration message comprising at least current information on routing from the user terminal to the server; and
acquiring, by the server, from the received registration message the information on routing from the user terminal to the server.

15. A system for acquiring routing information, comprising a server and a network registration unit, wherein:
the network registration unit comprises a report unit adapted to report registration information of a user terminal to the server; and
the server comprises a routing information acquisition unit adapted to receive the registration information of the user terminal reported by the network registration unit and to acquire, from the registration information, information on routing from the user terminal to the server.

16. The system for acquiring routing information according to claim 15, wherein the server further comprises:
a subscription unit, adapted to subscribe to the registration information of the user terminal at the network registration unit; and
wherein the report unit reports the registration information of the user terminal to the server according to the subscription.

17. The system for acquiring routing information according to claim 15 or 16, wherein the server further comprises:
a record unit, adapted to record the routing information of the user terminal acquired by the routing information acquisition unit.
